# EUROPEAN PATENT APPLICATION

(11) **EP 1 252 959 A2**
(43) Date of publication of application: **30.10.2002**
(21) Application number: 02291013.7
(22) Date of filing: 22.04.2002
(51) Int. Cl.: B23D 79/02

(54) **Welded tube internal surface bead cutting apparatus**

(30) Priority: 24.04.2001 JP 2001126490; 24.04.2001 JP 2001126491; 24.04.2001 JP 2001126492; 24.04.2001 JP 2001126493
(71) Applicant: MITSUBISHI SHINDOH CO., LTD., Chuo-ku, Tokyo (JP)
(72) Inventor: Kazama, Takashi, c/o Mitsubishi Shindoh Co., Ltd., Aizuwakamatsu-shi, Fukushima-ken (JP); Ozaki, Kazunori, c/o Mitsubishi Shindoh Co., Ltd., Aizuwakamatsu-shi, Fukushima-ken (JP)
(74) Representative: Ilgart, Jean-Christophe

(57) **Abstract**

In the bead cutting apparatus of the present invention a cutting tool 22 is provided on the distal end of an impeder 21 so as to be able to swing. This swing uses a first bolt 45a as a fulcrum and is within a range allowed by the difference between the external diameter of a second bolt 45b and the internal diameter of a second hole 47. A blade tip portion 33 is provided at the distal end of a cutting tool body 32 and is provided at the impeder 21 side such that a cutting blade 34 can make contact with an internal surface bead B of a tube P. A spring member 38 is fixed by a fixing member 39 to a position partway along the cutting tool body 32 on the opposite side thereof to the cutting blade 34.

## Description

### BACKGROUND OF THE INVENTION

### Field of the Invention

The present invention relates to a welded tube internal surface bead cutting apparatus for cutting off an internal surface bead remaining on a welded portion of an electro-resistance-welded tube.

The present invention also relates to a chip processing method and chip processing apparatus for processing a chip created when an internal surface bead is cut off.

The present invention also relates to a weld spatter processing apparatus for collecting spatter scattered from a welded portion of an electro-resistance-welded tube.

### Background Art

Conventionally, electro-resistance-welded tubes used for hot water supply tubes and cold water supply tubes or for heat exchange tubes in air conditioners or refrigerators or the like are formed in a tube shape by bending a metal strip into a rounded shape as it is being fed along. The metal strip in this case is a thin strip of metal formed from copper or brass or the like. A tube is then formed by continuously welding both edges of the rounded material as it is fed out using a welding device provided by a high frequency dielectric welder or a high frequency resistance welder or the like. After weld bead portions remaining on the internal surface and external surface of the welded portions of the electro-resistance-welded tube have been removed by a cutting apparatus, the tube is shaped via a sizing process and is then cut into predetermined lengths.

An example of a cutting apparatus used for cutting off this internal surface bead inside an electro-resistance-welded tube is disclosed, for example, in Japanese Patent Application Laid-Open (JP-A) No. 11-33814. This apparatus is provided with rolls that abut against internal tube surfaces both above and below a carriage that is fixed to a support member and is inserted into the electro-resistance-welded tube. Above the top portion of the carriage the apparatus is also provided with a blade for removing an internal surface bead that is mounted on a machine frame, and with a cutting machine for cutting a chip of the cut bead into shorter pieces. When the internal surface bead is being cut off, a hydraulic cylinder provided inside the carriage is operated so that the machine frame supporting the blade is raised up. As a result, the blade is placed in contact with the internal surface bead and is able to cut off the bead. The chip created by this is cut into shorter pieces by the cutting machine placed directly below and these are moved along together with the electro-resistance-welded tube.

However, in the above described internal surface bead cutting apparatus, it has proved difficult to adjust the cutting blade position relative to the internal surface of the electro-resistance-welded tube in order to move the blade up and down a fixed distance using the hydraulic cylinder on the carriage so that the blade is placed in a cutting position to cut the internal surface bead or in a non-cutting position. Therefore, if the load from the cutting blade on the internal surface bead or the depth of the cut varies due to manufacturing errors in the carriage or cutting blade or due to errors in the position of the cutting blade or carriage, then because either too much of the internal surface bead may be removed or the amount removed may be insufficient, the problem arises that a bead on the internal surface cannot be cut with a sufficient degree of precision.

Moreover, because rolls that abut against the internal surface of the electro-resistance-welded tube are provided respectively above and below the carriage in order for the internal surface bead to be cut off by the cutting blade as the electro-resistance-welded tube is moved relative to the carriage, when the rolls become worn with the passage of time, the cutting depth of the blade varies during the cutting of the internal surface bead with the result that it is not possible for the internal surface bead to be cut off with precision.

Furthermore, spatter that is generated during the welding of the electro-resistance-welded tube is cooled and collects and hardens as a solid block. Consequently, this spatter tends to be flushed forward by cooling water and the like and become meshed with the rolls. This results in the rolls being prevented from turning and causes the rolls to become worn and damaged. In this case as well, the internal surface bead cannot be removed with precision.

Moreover, in the above described internal surface bead cutting apparatus, in addition to the blade for removing an internal surface bead, the carriage is provided with a cutter for the chip, a hydraulic cylinder, top and bottom rolls, and the like. Therefore, because the chip created when the internal surface bead is cut by the above blade is guided to a cutting machine directly below and is cut into short pieces, the cut chip pieces easily become entangled with the various members on the carriage and the problem arises that a smooth flow in the transporting direction of the electro-resistance-welded tube is prevented. The further problem exists that the structure of the carriage is complex causing costs to be high.

Moreover, when welding is performed using the above apparatus, spatter is scattered on the inside and outside of the electro-resistance-welded tube from the welded portions in the metal strip. In particular, when the material of the metal strip is formed from brass, more spatter is generated during the welding than is generated when other materials are used.

In this case, the spatter generated outside the electro-resistance-welded tube is scattered to surrounding areas contaminating the surrounding environment. Moreover, because a portion thereof adheres to the electro-resistance-welded tube and hardens, not only is the quality of the external surface of the electro-resistance-welded tube deteriorated, but the aesthetic appearance of the exterior is also ruined.

### SUMMARY OF THE INVENTION

The electro-resistance-welded tube internal surface bead cutting apparatus according to the present invention is an apparatus for cutting off an internal surface bead inside an electro-resistance-welded tube using a cutting blade of a cutting tool inserted into the electro-resistance-welded tube, wherein the cutting tool is mounted on a distal end of an impeder such that the cutting tool is able to swing, and the cutting tool swings in a direction in which the cutting blade comes into contact with the internal surface bead and moves away from the internal surface bead.

According to this apparatus, when a cutting tool is inserted together with an impeder into an electro-resistance-welded tube to a welded portion thereof and the welding of a metal strip and cutting off of an internal surface bead are performed, if the blade of the cutting tool inserted into the electro-resistance-welded tube approaches too close to the internal surface bead, the cutting tool swings around the impeder in a direction in which it moves away from the internal surface bead and the depth of the cut is reduced. Alternatively, if the blade is too far from the internal surface bead, the cutting blade of the cutting tool swings in a direction in which it approaches the internal surface bead side from the internal surface side of the tube, thereby enabling the depth of the cut to be increased. As a result, the load on the cutting blade and the depth of the cutting during the cutting of an internal surface bead can be controlled appropriately.

It is also possible for the cutting tool to be provided with an elastic member that urges the cutting blade in a direction in which the cutting blade presses against the internal surface bead. In this case, if the blade of the cutting tool approaches closer to the internal surface bead relative to the impeder so that it cuts too deeply, because the urging force of the elastic member is comparatively small, the cutting tool swings in a direction away from the internal surface bead. If the cutting blade moves away from the internal surface bead so that the depth of the cut is too shallow, because the urging force of the elastic member is comparatively large, the cutting tool swings towards the internal surface bead. Therefore, variations in the load on the cutting blade and the depth of the cutting during the cutting of an internal surface bead can be suppressed and precise cutting can be achieved.

The elastic member may be mounted on the cutting tool and a portion thereof may be in contact with the inner surface of the electro-resistance-welded tube. Either one or a plurality of elastic members may be mounted in the circumferential direction of the cutting tool. When one elastic member is provided the elastic force can be transmitted straight to the cutting blade if the elastic member is provided on the opposite side to the cutting blade and sandwiching the cutting tool. If two or more elastic members are provided it is preferable if they are positioned linearly symmetrically relative to a virtual line connecting the cutting blade and the cutting tool. By employing such a structure, particularly when the electro-resistance-welded tube has a large internal diameter, it is possible to simultaneously prevent the cutting blade from pushing against the internal surface bead and from shifting in the circumferential direction.

It is also possible to provide a plurality of groups of elastic members separated from each other in the longitudinal direction of the cutting tool, and in the same manner as described above for each group of elastic members to be provided with either one or a plurality of elastic members in the circumferential direction of the cutting tool. By employing such a structure, the holding power with which the cutting tool is held is increased and shifting of the cutting blade position can be prevented thereby enabling the contact with the internal surface bead to be ensured.

It is also possible for the elastic member to make contact with an internal surface of an electro-resistance-welded tube via a protective member that is formed from a non-metallic material and has a low coefficient of friction.

By employing a protective member it is possible to prevent the elastic member from coming into contact with the internal surface of the electro-resistance-welded tube and scratching the internal surface while the electro-resistance-welded tube is moving, and to prevent variations in the urging force cause by wearing of the elastic member.

The electro-resistance-welded tube internal surface bead cutting apparatus according to another aspect of the present invention is an apparatus for cutting off an internal surface bead inside an electro-resistance-welded tube using a cutting blade of a cutting tool inserted into the electro-resistance-welded tube, wherein the cutting tool is provided with a cutting blade that faces rearward in the transportation direction of the electro-resistance-welded tube, and a face of this cutting blade is formed so as to be slanted relative to the transportation direction of the electro-resistance-welded tube from one end to another end in a direction in which the cutting blade extends, and wherein an internal surface bead chip that has been cut off by the cutting blade is guided by the face and is sent in the transportation direction of the electro-resistance-welded tube.

The internal surface bead inside an electro-resistance-welded tube that has been welded and is being transported is removed by a cutting tool. This internal surface bead chip is guided by a face and is curled into a helical shape and is then sent smoothly in the transportation direction of the electro-resistance-welded tube. Accordingly, it is continuously transported forward inside the electro-resistance-welded tube together with the electro-resistance-welded tube without being cut. Therefore, the cutting tool only cuts the internal surface bead and acts as a transportation guide enabling the structure of the cutting apparatus to be simplified. Moreover, the internal surface bead that has become a chip can be smoothly removed and transported.

It is also possible for the cutting blade to be formed substantially in a circular arc shape running in an internal surface circumferential direction of the electro-resistance-welded tube. Even if the position of the internal surface bead shifts slightly in the circumferential direction relative to the cutting blade due to twisting or the like during the welding of the electro-resistance-welded tube, because the cutting blade is formed in substantially a circular arc shape along the inner surface peripheral direction of the cutting blade, the internal surface bead can be reliably removed.

In the electro-resistance-welded tube chip processing method according to another aspect of the present invention, an internal surface bead of a moving electro-resistance-welded tube is cut off by a cutting tool and the chip is sent in the transportation direction of the electro-resistance-welded tube, and thereafter the chip inside the electro-resistance-welded tube is cut and discharged together with the electro-resistance-welded tube.

The chip of the internal surface bead is curled into a helical shape and sent forward continuously without being cut, however, when the electro-resistance-welded tube is cut into predetermined lengths the chip that is being transported inside the electro-resistance-welded tube is cut at the same time, and thereafter the chip pieces are discharged from the cut electro-resistance-welded tube. It is also possible for the chip pieces to be discharged by supplying washing water to the inside of the cut electro-resistance-welded tube. By supplying washing water to the inside of the electro-resistance-welded tube, the cut chip pieces can be discharged together with solidified spatter from the welding.

The electro-resistance-welded tube chip processing apparatus, according to the present invention is provided with: a cutting tool for cutting off an internal surface bead of a moving electro-resistance-welded tube and sending the chip in the transportation direction of the electro-resistance-welded tube; a cutting machine for cutting the electro-resistance-welded tube from which the internal surface bead has been removed together with the chip inside the electro-resistance-welded tube; and chip discharge device for removing the cut chip from inside the cut electro-resistance-welded tube.

According to this apparatus, because the chip is not cut when the internal surface bead is removed from the electro-resistance-welded tube but the chip, which has been curled into a continuous helical shape inside the electro-resistance-welded tube, is cut at the same time as the electro-resistance-welded tube is cut, the cutting of the electro-resistance-welded tube and the chip can be performed simultaneously enabling the apparatus structure and the chip processing step to be simplified.

It is also possible for the chip discharge device to have washing device that discharges the chip pieces by supplying washing water to the inside of the electro-resistance-welded tube. Cut chip pieces can thus be easily discharged together with solidified spatter and the like from the cut electro-resistance-welded tube.

The electro-resistance-welded tube internal surface bead cutting apparatus according to another aspect of the present invention is an apparatus for cutting off an internal surface bead inside an electro-resistance-welded tube using the cutting blade of a cutting tool inserted into the electro-resistance-welded tube, wherein the cutting tool is provided with an elastic member that imparts elasticity in a direction in which the cutting blade presses against the internal surface bead.

When the cutting tool is inserted inside an electro-resistance-welded tube, because it is possible for the elastic member to push the cutting blade of a cutting tool against an internal surface bead when the internal surface bead is to be cut off by the cutting blade of the cutting tool while the electro-resistance-welded tube is being moved relative to the cutting tool, it is possible for the cutting blade to only cut the internal surface bead stably at a predetermined depth using the urging force of the elastic member, and to thereby continuously and stably cut off and remove the internal surface bead.

It is also possible for the elastic member to be mounted on the cutting tool and for a portion of the elastic member to make contact with the internal surface of the electro-resistance-welded tube so that the cutting blade is urged against the internal surface bead by the elastic force of the elastic member. In this case, the relative movement of the electro-resistance-welded tube relative to the cutting tool can be stably performed with the elastic member in a state of contact with the internal surface of the electro-resistance-welded tube.

It is also possible for the elastic member to be provided in an area opposite the cutting blade. The elastic member can be provided on the opposite side from the cutting blade sandwiching the cutting tool so that the urging force of the elastic member can be transmitted straight to the oppositely located cutting blade of the cutting tool. It is also possible for a plurality of elastic members to be provided separated from each other in the internal surface circumferential direction of the electro-resistance-welded tube.

In particular, when the electro-resistance-welded tube has a large internal diameter, if a plurality of elastic members are provided separated from each other in the internal surface circumferential direction, it is possible to prevent the cutting blade from pushing against the internal surface bead and from shifting in the circumferential direction. A plurality of groups of elastic member may be provided at staggered positions in the lengthwise direction of the cutting tool. This enables the holding power with which the cutting tool is held to be increased and the contact of the blade with the internal surface bead to be ensured.

It is also possible for the cutting tool to be provided with an adjusting member for adjusting an elastic force of the elastic member.

Because it is possible to adjust the urging force of the elastic member on the cutting blade by operating the adjusting member, it is possible to appropriately set and adjust the depth of the cutting of the internal surface bead by the cutting blade, and it is also possible to suppress variations in the depth of the cutting of the internal surface bead by the cutting blade using the adjusting member even when the urging force changes because of wear or fatigue or the like in the elastic member.

It is also possible for the elastic member to make contact with an internal surface of an electro-resistance-welded tube via a protective member that is formed from a non-metallic material and has a low coefficient of friction. If the elastic member is placed in direct contact with the internal surface of the electro-resistance-welded tube, there is a possibility that the internal surface of the electro-resistance-welded tube will be rubbed due to the movement of the electro-resistance-welded tube and will become scratched, or that the elastic member will become worn and the urging force thereof on the cutting blade will vary. However, by interposing a protective member having a low coefficient of friction, it is possible to prevent the internal surface of the electro-resistance-welded tube from becoming scratched or the urging force from varying due to wear in the elastic member.

It is also possible for the protective member to be formed from fluororesin. Because fluororesin is a non-metallic soft material and has extremely good resistance to heat and electrical insulation properties, and also has low adhesion and a low coefficient of friction, it is possible to not only prevent the internal surface of the electro-resistance-welded tube from becoming scratched, but also to prevent the elastic member from becoming worn.

The cutting tool may be mounted on the distal end of a support member so as to be able to swing in a direction in which the cutting blade moves towards or away from the internal surface bead.

There is a concern that the depth to which the internal bead surface is cut by the cutting blade may vary due to variations in the dimensions of the internal diameter of the electro-resistance-welded tube, or to positioning errors when the cutting tool is inserted inside the electro-resistance-welded tube, or to manufacturing errors in the actual cutting tool or the like itself. However, if the cutting tool is able to swing relative to the support member, then even if the blade does cut too deeply into the internal surface bead when the cutting tool is inserted, the cutting tool swings (due to its weight) in a direction in which the cutting blade moves away from the internal surface bead, and because the cutting tool is urged in the direction of the internal surface bead by the elastic member, the depth of the cutting by the cutting blade can be appropriately controlled.

The weld spatter processing apparatus for an electro-resistance-welded tube according to another aspect of the present invention is formed by bending a moving plate shaped material into a tube shape and then heat welding both edges, and an aperture portion is provided in the vicinity of a welded portion of the electro-resistance-welded tube for guiding spatter that is generated by the welded portion, and spatter is collected through this aperture portion.

If spatter is scattered around the external surface from the welded portion in the electro-resistance-welded tube, because this spatter is guided into the aperture portion and collected before it is scattered too widely, it can be prevented from flying into surrounding areas and spatter adhering to the external surface of the electro-resistance-welded tube can be effectively suppressed.

It is also possible for the aperture portion to be in contact with a top of the electro-resistance-welded tube via a removing member that collects spatter adhering to the electro-resistance-welded tube. In addition to supporting the aperture portion of the weld spatter processing apparatus on the electro-resistance-welded tube, by pressing the removing member against the electro-resistance-welded tube using the aperture portion, even if the portion of the spatter that misses the aperture portion or bounces off the aperture portion and falls down adheres to the external surface of the electro-resistance-welded tube, it is possible to wipe off the spatter before it hardens using the removing member as the electro-resistance-welded tube is being transported.

It is also possible for water to be supplied to the removing member. By constantly supplying water to the removing member, the removing member can be prevented from becoming hot due to heat conduction from the welded portion and consequently drying out, and the contact area of the removing member that is in contact with the electro-resistance-welded tube can be increased, thereby enabling spatter to be reliably removed.

It is also possible for the weld spatter processing device to be provided with suction device or blowing device so that spatter that is scattered inside the aperture portion is collected using the suction device or blowing device.

Spatter that has adhered to the internal surface of the aperture portion and bounced back can be moved and collected by being suctioned or blown while still a powder before it aggregates and hardens into an irregular mass.

In the weld spatter processing apparatus for an electro-resistance-welded tube formed by bending a moving plate shaped material into a tube shape and then heat welding both edges, a removing member that collects spatter adhering to the electro-resistance-welded tube is in contact with the top of the electro-resistance-welded tube.

If spatter is scattered around the external surface from the welded portion in the electro-resistance-welded tube during welding, this spatter is widely scattered and a portion thereof adheres to the external surface of the electric-resistance-welded tube, however, by using the removing member to wipe off this spatter before it hardens as it is being transported, the quality of the external surface of the electro-resistance-welded tube can be kept at an excellent level.

It is also possible for the removing member to be a non-metallic soft member. For example, it may be formed from a fabric such as absorbent cotton or flannel, or from a rubber member, thereby enabling spatter adhering to the electro-resistance-welded tube to be easily removed before it hardens.

It is also possible for the aperture portion of the weld spatter processing apparatus to be formed in the shape of a bell mouth tube and positioned slightly removed from and facing the welded portion of the electro-resistance-welded tube, with the aperture portion shaped so that spatter that hits the internal surface of the aperture portion is made to go inside the aperture portion.

### BRIEF DESCRIPTION OF THE DRAWINGS

Fig. 1 is a schematic view showing a line of an electro-resistance-welded tube manufacturing apparatus according to an embodiment of the present invention.
Fig. 2 is a schematic view showing a state in which an electro-resistance-welded tube internal surface bead is being cut by a cutting tool mounted on an impeder used in the manufacturing apparatus shown in Fig. 1.
Fig. 3 is a plan view of the main portions showing a broken out view of the join structure of the cutting tool and impeder shown in Fig. 2.
Fig. 4 is a view looking in the direction of the cutting blade from a cross section along the line A-A in the cutting tool shown in Fig. 2.
Fig. 5 is a side view of the main portions of the cutting apparatus according to a second embodiment.
Fig. 6 is a view looking in the direction of the cutting blade from a cross section along the line C-C in the cutting tool shown in Fig. 5.
Fig. 7 is a side view of the main portions of the cutting apparatus according to a third embodiment.
Fig. 8 is a plan view of the main portions of the cutting apparatus shown in Fig. 7.
Fig. 9 is a view looking in the direction of the cutting blade from a cross section along the line D-D in the cutting tool shown in Fig. 7.
Fig. 10 is a perspective view of the main portions showing a state in which an internal surface bead is being cut by a cutting tool.
Figs. 11A and 11B are views of a processing apparatus for performing cutting and chip processing for an electro-resistance-welded tube. Fig. 11A is an overall plan view thereof, while Fig. 11B is a side view of an inclined state of a stock table.
Figs. 12A and 12B are views showing a variant example of a cutting tool. Fig. 12A is a plan view of a distal end portion of the cutting tool, while Fig. 12B is a side view of the same distal end portion of the cutting tool.
Fig. 13 is a cross sectional view showing the same portions as are shown in Fig. 2.
Fig. 14 is a schematic plan view showing a bell mouth tube of a weld spatter processing apparatus provided in the welded portion of the electro-resistance-welded tube.
Fig. 15 is a perspective view of the main portions showing a state in which spatter is being collected by the weld spatter processing apparatus bell mouth tube shown in Fig. 14.
Fig. 16 is a schematic frontal view showing the weld spatter processing apparatus bell mouth tube shown in Fig. 14.
Fig. 17 is a schematic view of a weld spatter processing apparatus.

### DESCRIPTION OF THE PREFERRED EMBODIMENTS

Preferred embodiments of the present invention will now be described with reference to the attached drawings. It is to be understood, however, that the present invention is in no way limited to the respective embodiments described below. For example, component elements of these embodiments may be suitably combined together.

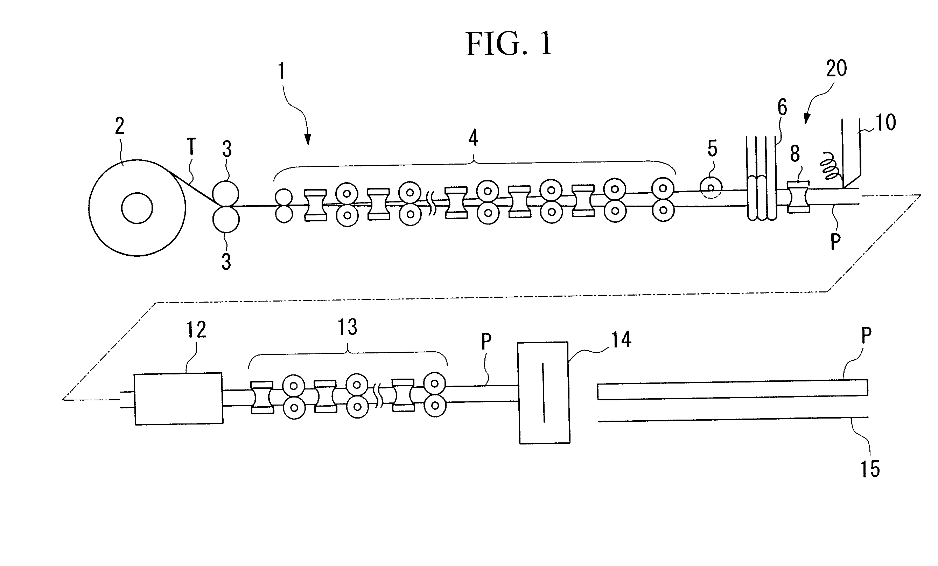

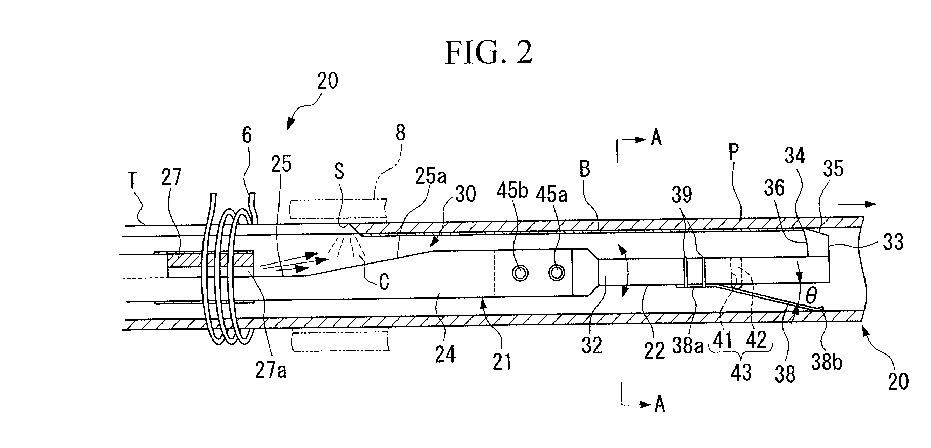

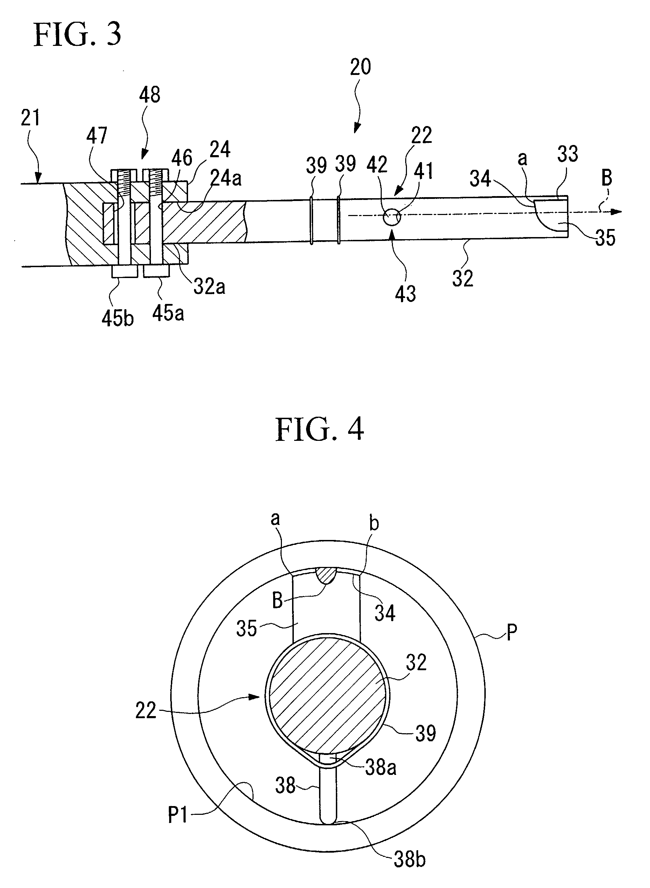

The cutting apparatus according to the first embodiment of the present invention will now be described with reference made to Figs. 1 through 4. Fig. 1 is a schematic view showing a production line of an electro-resistance-welded tube manufacturing apparatus. Fig. 2 is a schematic view of a cutting tool and an impeder used in the manufacturing apparatus shown in Fig. 1. Fig. 3 is a plan view of the cutting tool shown in Fig. 2. Fig. 4 is an enlarged cross sectional view looking in the direction of the cutting blade from a cross section along the line A-A in the cutting tool shown in Fig. 2.

The electro-resistance-welded tube according to the present embodiment is a simple metal tube having a smooth internal surface and is used as a hot water supply tube, a cold water supply tube, or the like, however, the present invention may also be applied to any metal tube such as a metal tube that has irregular structures formed on the external surface of the tube or that has grooves formed on the internal surface of the tube and is used in refrigerators or air-conditioning equipment. Moreover, the material from which the electro-resistance-welded tube according to the present embodiment is formed is brass, however, the present invention may also be applied to copper tubes, aluminum tubes, or metal tubes formed from some other material.

In the manufacturing apparatus 1 for manufacturing an electro-resistance-welded tube (referred to below simply as a "tube") shown in Fig. 1, a metal strip T in the form of a continuous belt having a constant width that is formed from a belt of metal such as brass is continuously fed out from an uncoiler 2. The fed out metal strip T passes through a pair of pressing rolls 3 and then through a plurality of pairs of forming rolls 4 arranged in a row. The metal strip T is thus gradually rounded into the shape of a C. Once the amount of the gap between the two edges of the metal strip T that are to be butted together by a rolling separator 5 is constant, the metal strip T is passed through a work coil of an induction heating section, for example, through an induction heating coil 6.

The induction heating coil 6 heats the metal strip T that has been rounded into a C shape and generates joule heat concentrated in both edges. When the metal strip T passes through a pair of squeeze rolls 8 and 8 the two heated edges are pressed so as to be butted together and are then welded. On the internal and external surfaces of the electro-resistance-welded tube P formed by the welding of the metal strip T, internal and external surface beads are formed from fused material extruded from the welded portion.

The external surface bead is cut off and removed by a cutting apparatus 10 and the internal surface bead is also cut off and removed by a cutting tool described below. After the tube P has passed through a cooling tank 12 and been forcibly cooled, it is shrunk to a predetermined external diameter by being passed through a plurality of pairs of sizing rolls 13 arranged in a row. After the tube P has been shaped by a shaping roll (not shown) it is cut into predetermined lengths, for example, 4 to 6 mm by a cutting apparatus 14 and the cut tubes are then stacked on a stock table 15.

A detailed description will now be given using Figs. 2 through 4 of the internal surface bead cutting apparatus in the electro-resistance-welded tube manufacturing apparatus 1 having the above described structure.

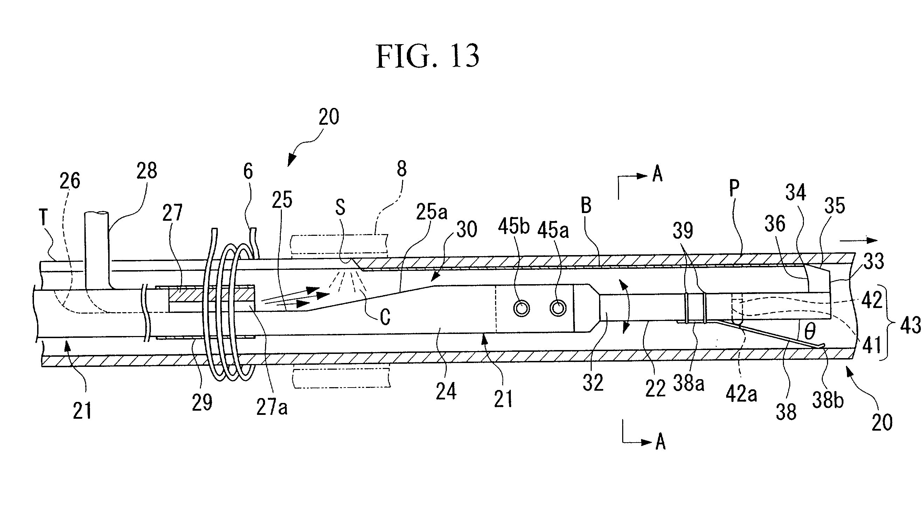

As shown in Figs. 2 and 3, in the cutting apparatus 20 of the present embodiment, a cutting tool 22 for cutting off an internal surface bead B inside the tube P is mounted at a distal end of an impeder 21 used for welding, namely, at the distal end in the direction in which the tube P is transported. Fig. 13 is a cross sectional view showing the same portions as are shown in Fig. 2.

A description will firstly be given of the welding apparatus that houses the impeder 21. The impeder 21 is shaped substantially as a rod and, as is shown in Fig. 2, is inserted into the sheet shaped member T that has been rounded into a C shape extending into the tube P that is formed when the two edges of the sheet shaped member T are welded.

The top portion of the impeder body 24 of the impeder 21 is cut off in the vicinity of a weld portion S in the metal strip T so that, for example, a substantially flat top surface portion 25 is formed. The distal end side thereof is formed by an inclined surface 25a cut so as to rise gradually upwards, and a concave groove is formed at the rear end portion of the top surface portion 25. A ferrite core 27 having a substantially circular arc shaped cross section is mounted above the upper surface portion 25 in the area directly beneath the induction heating coil 6. An open passage 27a is formed by the ferrite core 27 and the upper surface portion 25.

The open passage 27a communicates with the distal end of a cooling water supply tube for supplying cooling water that is fitted into the concave groove. Cooling water is thus supplied to a spatter fall surface 30, which is formed by the top surface portion 25 and the inclined surface 25a, that is disposed in front of the open passage 27a. Above the spatter fall surface 30 is positioned the weld portion S, which is sandwiched by the pair of squeeze rolls 8 and 8.

The cutting tool 22 is supported so that it can swing at the distal end of the impeder body 24. A blade tip portion 33 protruding outwards in a diametrical direction is provided at the distal end of the cutting tool body 32 formed substantially in a rod shape, namely, at the forward end in the movement direction of the tube P. A cutting blade 34 is provided at an outside end portion in the diametrical direction of the blade tip portion 33 facing in the direction of the impeder 21.

The cutting blade 34 removes the internal surface bead B on the tube P by cutting into the internal surface bead B and is formed in a circular arc shape running along the internal surface P1 of the tube P. Moreover, as is shown in plan view in Fig. 3, the cutting blade 34 is formed in a non-linearly symmetrical convex curve such that, moving from one end in the direction in which it extends towards the other end, there is a gradual displacement to the distal end side. If the dot-dash chain line in Fig. 3 is taken as showing the direction of movement of the internal surface bead B, then preferably the internal surface bead B is cut at a point partway along the convex curve of the cutting blade 34.

The flank 35 of the cutting blade 34 is formed as a convex curved surface running along the internal surface P1 and has a positive clearance angle while the face 36 thereof also has a positive rake angle. In addition, the face 36 is formed as a convex curved surface, as seen in plan view in Fig. 3, that gradually approaches the distal end side from one end to the other end along the convex curve shape of the cutting blade 34. The face 36 also forms a concave curved surface, for example, in the side surface view shown in Fig. 2. As a result, the chip from the internal surface bead B can be made to curl in a helical shape and guided in the distal end direction.

As is shown in Figs. 2 and 4, a spring member 38 having, for example, either a linear or plate configuration is provided as an elastic member at a position opposite the cutting blade in the diametrical direction with the cutting tool body 32 sandwiched in between. A base portion 38a of the spring member 38 is fixed by a fixing member 39 formed by wires or the like to a portion partway along the cutting tool body 32 in the longitudinal direction thereof. A distal end portion 38b of the spring member 38 is inclined so as to gradually move away from the cutting tool body 32 in the direction of the distal end and is formed as a convex curved line or convex curved surface that abuts against the internal surface P1 of the tube P and also curves towards the inside. As a result, the spring member 38 is prevented from scratching the inside surface P1 of the tube P.

A screw hole 41 having a female thread is formed penetrating the cutting tool body 32 partway along the cutting tool body 32. A headless screw 42 is meshed with the screw hole 41 such that the screw 42 can be screwed into or out of the screw hole 41. The distal end portion of the screw 42 protrudes from the screw hole 41 on the opposite side to the cutting blade 34 and presses the inclined portion of the spring member 38 thereby providing an adjusting member 43. Therefore, by screwing the headless screw 42 into or out of the hole 41, it is possible to adjust the angle θ of the inclination of the spring member 38 relative to the cutting tool body 32. As a result, the elastic force of the spring member 38 can be adjusted.

In Fig. 3, the base portion 32a of the cutting tool body 32 is fitted into a concave portion 24a provided at the distal end of the impeder body 24 and supported by fastening members, for example, two bolts 45a and 45b that are inserted through the base portion 32a and fixed by nuts. A swing mechanism 48 is thereby formed. In this case, the internal diameter of a first hole portion 46 on the distal end side of the two holes opened in the base portion 32a is substantially the same size as the external diameter of the shaft portion of the first bolt 45a. In contrast, the internal diameter of a second hole portion 47 on the rear end side is larger than the external diameter of the shaft portion of the second bolt 45b.

When the inside of the tube P is being cut, if the cutting blade 34 cuts too deeply into the internal surface bead B, then the load is large. In this case, the load in the cutting is lessened by the cutting tool 22 swinging relative to the impeder body 24 in a direction moving away from the internal surface bead B. If the depth of the cutting of the internal surface bead B by the cutting blade 34 is too shallow, the spring member 38 is compressed against the internal surface P1 of the tube P on the opposite side to the internal surface bead B causing the cutting tool 22 to be moved by the elastic force towards the internal surface bead B side. This allows the depth of the cutting by the blade 34 to be stabilized.

As a result, the load on the cutting blade 34 during the cutting of an internal surface bead, namely, the cutting depth can be appropriately controlled.

The electro-resistance-welded tube manufacturing apparatus 1 according to the present embodiment has the structure described above. Next, the method of cutting an internal surface bead in an electro-resistance-welded tube P will be described.

When the metal strip T passes via the induction heating coil 6 through the pair of squeeze rolls 8 and 8, the two edges that have been heated by the induction heating coil 6 are pressed and butted together, and are then welded. When the two edges of the metal strip T are welded spatter c is generated at the welded portion S and is scattered around the inside of the tube P and falls Onto the spatter fall surface 30. When brass is used as the material for the metal strip T there is more spatter c generated at the welded portion S than when other materials are used.

The spatter c that falls onto the spatter fall surface 30 is flushed to the front of the tube P by cooling water that is injected through the open passage 27a of the ferrite core 27. When the tube P is welded at the welded portion S, internal and external surface beads B are formed and the external surface bead B is removed by the cutting apparatus 10.

The internal surface bead B is cut off by the cutting blade 34 of the cutting tool 22 that is supported at the distal end of the impeder 21 as the welded tube P is being transported forward.

If the distal end side of the cutting tool 22 inclines towards the internal surface bead B side of the tube P so that the cutting blade 34 is pressed against the internal surface bead B more than is necessary making the depth of the cut too great, the distal end side of the cutting tool 22 tries to rotate downwards relative to the impeder body 24, namely, in a direction away from the internal surface bead B around the fulcrum of the first bolt 45a. Because, however, the cutting tool 22 is urged upward by the spring member 38 that is abutting against the internal surface P1 of the tube P, due to the two repelling forces canceling each other out, the cutting tool 22 is held in a state of being urged upwards such that the cutting blade 34 is made to cut the internal surface bead B by a suitable urging force.

If the distal end side of the cutting tool 22 inclines in a direction away from the internal surface bead B so that the cutting blade 34 moves away from the internal surface bead B more than is necessary making the load too light, the spring member 38 abutting against the internal surface P1 of the tube P is compressed and the cutting tool 22 is urged upwards. As a result, the distal end side of the cutting tool 22 is rotated upwards relative to the impeder body 24, namely, in a direction approaching the internal surface bead B around the fulcrum of the first bolt 45a, and the cutting tool 22 is held in a state of being urged upwards such that the cutting blade 34 is made to cut the internal surface bead B by a suitable urging force.

Because, in this state, the tube P is transported forward in the longitudinal direction thereof, the cutting blade 34 of the cutting tool 22 cuts off the internal surface bead B at a predetermined cutting depth, so that the internal surface bead B is removed as a chip. At this time, because the cutting blade 34 is formed in a circular arc shape running along the internal surface of the tube P, it can still reliably cut off the internal surface bead B if the tube P becomes slightly twisted and the internal surface bead B is slightly shifted in position.

The chip from the internal surface bead B that is thus generated is made to curl in a helical shape by the face 36 and is made to go in the direction of the distal end while being guided on the face 36 running in the direction in which the cutting blade 34 extends.

With the cutting tool 22 inserted inside the tube P and cutting off the internal surface bead B, due to errors or to minute changes in the internal diameter dimensions of the moving tube P, or due to minute dimensional errors or the like when the cutting tool 22 is exchanged, the depth to which the internal bead surface B is cut by the cutting blade 34 may not be sufficient in spite of the swing mechanism and spring member 38 being provided. In such cases, it is sufficient if the headless spring 42 of the adjusting member 43 is screwed in so as to press contact the spring member 38 and increase the angle θ of the inclination of the spring member 38 relative to the cutting tool 22, thereby increasing the elastic force. This results in the depth of the cutting of the internal surface bead B by the cutting blade 34 being increased.

In contrast, if the depth of the cutting of the internal surface bead B by the cutting blade 34 is too great, it is sufficient if the headless spring 42 is screwed out slightly from the screw hole 41 so as to decrease the angle θ of the inclination of the spring member 38 and thereby reduce the elastic force. This results in the depth of the cutting of the internal surface bead B by the cutting blade 34 being decreased.

When the cutting off of the internal surface bead B is being performed while the tube P is being transported relative to the cutting tool 22, the tube P is transported while the distal end portion 38b of the spring member 38 provided on the cutting tool 22 is abutting against the internal surface P1. Therefore, even if spatter c that is generated during the welding of the metal strip T is carried into the tube P by the cooling water and collides with the spring member 38, there is little damage or wear or twisting of the spring member 38, unlike the case when rolls are used, and this allows a constant cutting depth to be maintained.

Even if the distal end portion 38b of the spring member 38 does become worn over time and the cutting depth is reduced, by screwing in the headless screw 42 of the adjusting member 43, the elastic force of the spring member 38 can be adjusted easily, thereby enabling the cutting depth of the cutting blade 43 to be kept constant.

It is preferable that a replaceable cutting tool 22 is used with each cutting tool having a size of cutting blade 34 and spring member 38 that correspond to the size of the internal diameter of the tube P.

As has been described above, according to the present embodiment, the cutting blade 34 can be prevented from cutting too deeply into the internal surface bead B by using a swing mechanism. In addition, by using the spring member 38, the transporting of the tube P relative to the cutting tool 22 can be guided and variations in the cutting depth can be suppressed and appropriately controlled. Moreover, even if spatter c from the welding forms solid blocks that collide with the spring member 38, damage or wear or twisting can be suppressed, unlike the case with rolls. Furthermore, by operating the adjusting member 43 as necessary, the setting of the depth of the cutting of the internal surface bead B by the cutting blade 34 can be controlled.

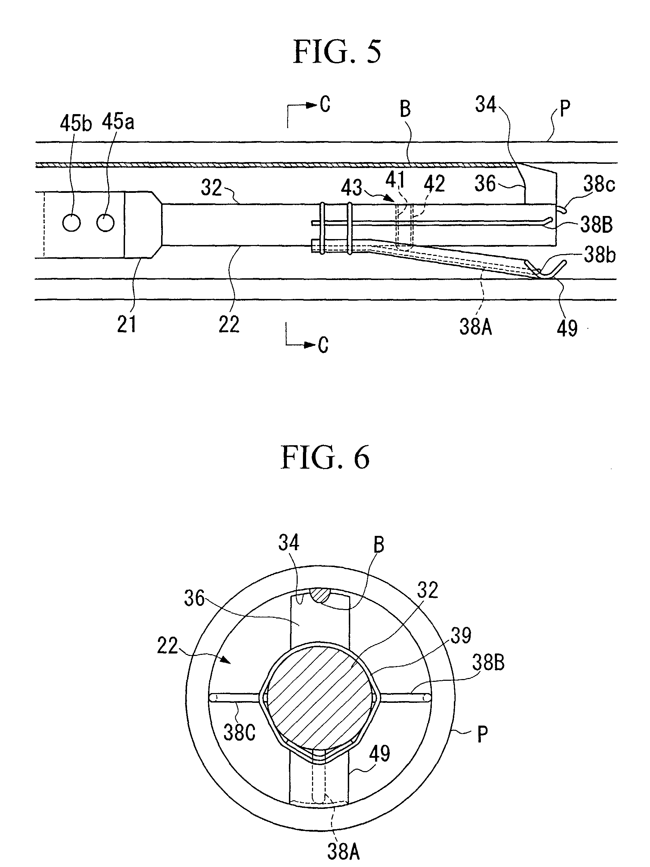

Another embodiment of the present invention will now be described with reference made to Figs. 5 through 8. Those portions and members thereof that are the same or similar as those in the above described embodiment are given the same descriptive symbols and a description thereof is omitted.

Figs. 5 and 6 show an internal surface bead cutting apparatus according to the second embodiment. Fig. 5 is a vertical cross sectional view of the cutting apparatus taken along the longitudinal direction of the tube P, while Fig. 6 is a view looking in the direction of the cutting blade from a cross section along the line C-C in Fig. 5.

In Figs. 5 and 6, for example, three spring members 38 are provided. A first spring member 38A is provided at the same position as in the first embodiment, namely, opposite the cutting blade 34. Second and third spring members 38B and 38C are provided, for example, at positions substantially 90° apart from the cutting blade 34 in the circumferential direction. By providing spring members 38 at substantially 90° intervals at three points in the circumferential direction of the cutting tool 22, the cutting blade 34 is held stably in position in the vertical and horizontal directions inside the tube P, enabling the internal surface bead B to be cut off with even greater precision.

According to the present embodiment, a protective layer 49 in the shape of a thin sheet made from fluororesin, for example, is attached to the outer side in the diametrical direction of the spring member 38A positioned opposite the cutting blade 34. The fluororesin is characterized in being a non-metallic, soft material and having extremely good heat resistance, electrical insulation, water repellency, and the like. It also has low adhesion and a low friction coefficient. The protective layer 49 is also fixed by the fixing member 39 together with the spring members 38A to 38C to the cutting tool 22.

As a result, the spring member 38A abuts against the internal surface P1 of the tube P via the protective layer 49 so that, even if the tube P is moved relative to the cutting tool 22, there is no concern that the internal surface P1 will be scratched or the like and the tube P can be transported even more smoothly. The protective layer 49 is provided because the spring member 38A is opposite the cutting blade 34 of the cutting tool 22 and receives the load during the cutting, however, because no large load is applied to the two opposing spring members 38B and 38C positioned on both side surfaces of the cutting tool 22, they do not have to be provided with the protective layer 49.

The protective layer 49 is adhered as a thin layer in the shape of a sheet to the outer side of the spring member 38A. However, instead of this, it is also possible for at least the entire distal end portion 38b of the spring member 38A to be covered by the protective layer 49.

It is to be understood that the protective layer 49 may also be provided on the second and third spring members 38B and 38C, and that the protective layer 49 may also be provided on the spring member 38 of the first embodiment.

As has been described above, according to the second embodiment, it is possible to ensure that scratches on the internal surface P1 of the tube P from the group of spring members 38A, 38B, and 38C that are staggered on the internal surface in the circumferential direction are prevented during the transporting of the tube P. It is also made possible for the cutting blade 34 to be positioned even more accurately.

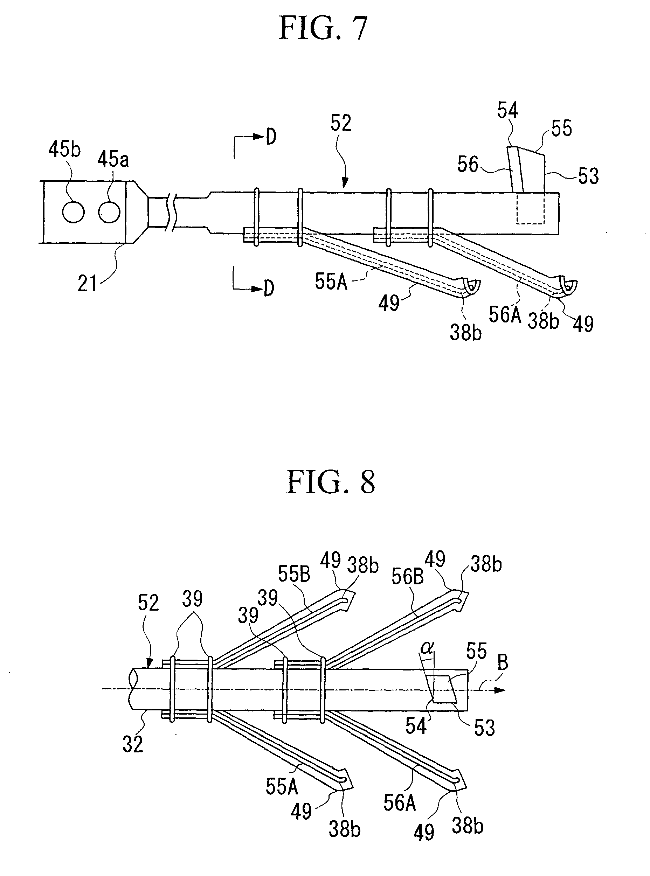

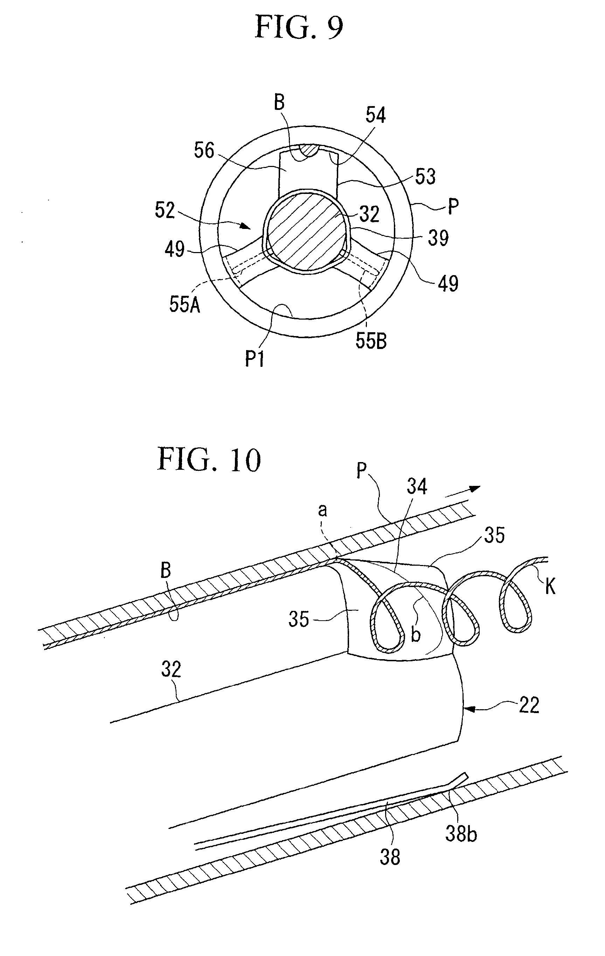

Next, Figs. 7 through 9 show the internal surface bead cutting apparatus according to the third embodiment. Fig. 7 is a side view of a cutting tool extending in the longitudinal direction of the tube P. Fig. 8 is a plan view of the same cutting tool, while Fig. 9 is a cross sectional view taken along the line D-D of the cutting tool shown in Fig. 7.

In the cutting tool 52 shown in Figs. 7 and 8, the cutting blade 54 of the blade tip portion 53 that is provided in the diametrical direction of the tube P at the distal end of the cutting tool 52 has, for example, a substantially rectilinear shape. In the plan view shown in Fig. 8, the cutting blade 54 is formed so as to be gradually closer to the distal end side moving from one end to the other end thereof in the direction in which the cutting blade 54 extends. The cutting blade 54 is also positioned diagonally at the acute angle α relative to a direction orthogonal to the internal surface bead B (shown by the dot dash chain line in Fig. 8) when an internal surface bead B is being cut. The flank 55 of the cutting blade 54 is formed as a positive flat plane and the face 56 is also formed as a positive substantially flat plane.

The face 56 is slanted so as to be closer to the distal end side moving from one end to the other end in the direction in which the cutting blade 54 extends. In addition, the face 56 is slanted so as to be closer to the distal end side the closer the face 56 comes to the cutting tool body 32 from the cutting blade 54.

Two groups of spring members 55A and 55B and 56A and 56B are provided at two different locations in the longitudinal direction of the cutting tool 52 partway along the cutting tool 52 in the longitudinal direction thereof with each member separated from the other in the circumferential direction. The first spring members 55A and 55B that are fixed to the impeder 21 side by the fixing member 39 are not provided, for example, at a position opposite the cutting blade 54, but are mounted at an interval of an obtuse angle, for example, 120° on both sides in the circumferential direction from the cutting blade 54.

The second spring members 56A and 56B are fixed in the same manner at a position closer to the blade tip 53 than the first spring members 55A and 55B.

Protective layers 49 are fixed respectively to the outer sides of the first and second spring members 55A, 55B, 56A, and 56B by the fixing members 39. Therefore, each distal end portion 38B that is bent around towards the inside of the respective spring members 55A, 55B, 56A, and 56B is in contact with the internal surface P1 of the tube P via the respective protective layer 49.

As has been described above, according to the present embodiment it is possible to increase the support strength for a cutting tool 52 when the length of the cutting tool 52 is longer than that of the cutting tool 22 of the above described embodiment or when the internal diameter of the tube P is larger. Moreover, by not providing a spring member opposite the cutting blade 54, but by setting spring members at an angle of both sides thereof (approximately 60° each in the example shown in the drawings), it is possible to distribute the load that corresponds to the cutting resistance of the internal surface bead B to the cutting blade 54 that is received, thereby allowing the pressure on the internal surface P1 of the tube P to be decreased.

In the cutting apparatus according to the third embodiment, the adjusting member 43 may be provided on each of the first and second spring members 55A, 55B, 56A, and 56B, or may be provided on just one of either the first or second spring members.

Three rows or more of spring members may be provided in the longitudinal direction of the cutting tool, alternatively, the spring members 38A, 38B, and 38C of the second embodiment or the like may be provided at different positions in the longitudinal direction.

The impeder 21 forms a support member for the cutting tool 22, however, it is not imperative that the cutting tool 22 be swingably mounted on the impeder 21, and the cutting tool 22 may also be fixed to the impeder 21. In this case also, the depth of the cutting of the internal surface bead B by the cutting blade 34 can be adjusted using the spring member 38.

Next, the cutting apparatus according to another embodiment of the present invention will be described. This apparatus has the structure shown in Figs. 1 to 4 and a description of the same structural elements is here omitted. Only those features that are different from the above embodiments will be described.

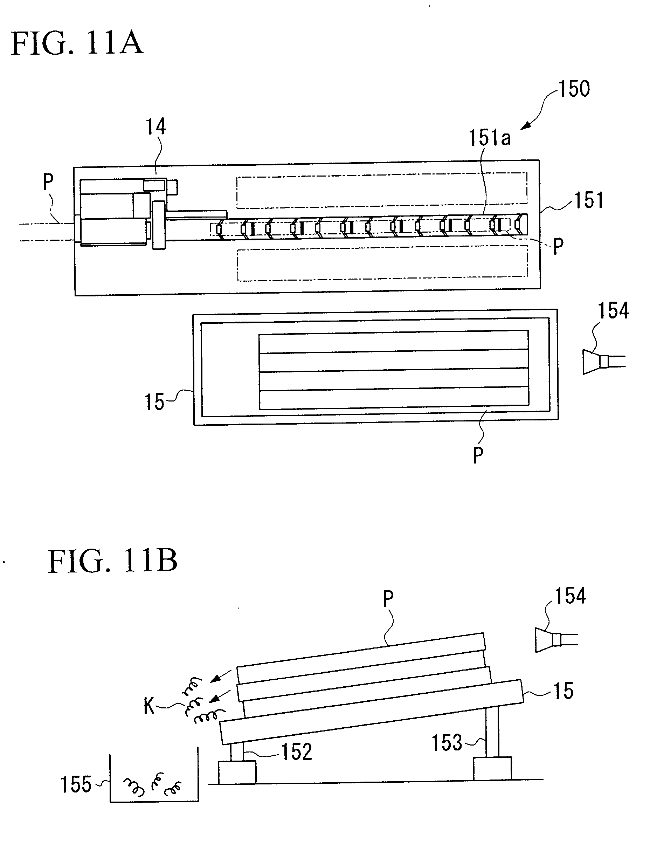

Fig. 10 is a perspective view of the main portions showing a state in which an internal surface bead is being cut by a cutting tool. Figs. 11A and 11B are views of a processing apparatus for an electro-resistance-welded tube. Fig. 11A is an overall plan view of the processing apparatus for an electro-resistance-welded tube, while Fig. 11B is a side view showing a chip processing state.

As is shown in Fig. 10, the cutting blade 34 is formed substantially in a circular arc shape following the circumferential direction of the internal surface P1 of the tube P. As is shown in plan view in Fig. 3, the cutting blade 34 is formed in, for example, substantially a 1/4 circular arc convex curve shape that is gradually displaced towards the distal end side (i.e., in the direction in which the tube P is transported) as it moves from one end a towards the other end b in the direction in which it extends.

The flank 35 of the cutting blade 34 is formed as a convex curved surface running along the internal surface P1 and has a positive clearance angle while the face 36 thereof also has a positive rake angle. In addition, the face 36 is inclined as a convex curved surface (see Figs. 3 and 10) that gradually approaches the distal end side in the transportation direction of the tube P from one end a to the other end b along the convex curve shape of the cutting blade 34. The face 36 also forms a concave curved surface moving from the cutting blade 34 towards the cutting tool body 32. As a result, the chip from the internal surface bead B can be made to curl in a helical shape and guided in the distal end direction.

A protective sheet having high wear resistance made from fluororesin, for example, may be provided at the outer side of the distal end portion 38b of the spring member 38. Scratches can be further prevented if the distal end portion 38 contacts the internal surface P1 via the protective sheet.

Consequently, the cutting tool 22 is supported so as to be able to swing relative to the impeder body 24 on the fulcrum of the first bolt 45a within the range allowed by the difference in the sizes of the outer diameter of the second bolt 45b and the inner diameter of the second hole portion 47. As a result, the cutting tool 22 is set to be able to swing relative to the impeder body 24 on the fulcrum of the first bolt 45a such that the cutting blade 34 is able to swing between a direction in which it presses against the internal bead surface B and makes a deep cut and a direction in which it moves away from the internal surface bead B, namely, in a direction in which it makes a shallow cut.

In the present embodiment, in the processing apparatus 150 shown in Fig. 11A, a semi-lift table 151 is provided in front of a cutting machine 14 for cutting the transported tube P into predetermined lengths. A tube P that has been cut to a predetermined size is lifted up in the diametrical direction of the tube P by a lifting member 151a provided on top of the semi-lift table 151, and is stacked on a stock table 15 disposed parallel to the semi-lift table 151.

As is shown in Fig. 11B, the stock table 15 is provided with a cylinder arm 153 as a portion of a leg portion 152 that supports the stock table 15. By extending or shortening the cylinder arm 153, the stack table 153 can be selectively changed between an inclined state and a level state. By discharging washing water inside the tube P, it is possible to flush out chips K together with solidified spatter and the like out of the tube P. A chip collecting box 155 is provided on the opposite side of the stock table 15 from the washing device 154.

The electro-resistance-welded tube cutting apparatus 20 and the processing apparatus 150 of the present embodiment have the above described structure. The cutting method to cut off an internal surface bead inside an electro-resistance-welded tube P and the chip processing method will now be described.

When the metal strip T passes through the pair of squeeze rolls 8 and 8 via the induction heating coil 6, the two edges that have been heated by the induction heating coil 6 are pressed and butted together, and are then welded. At this time, spatter c is generated at the welded portion S and is scattered around the inside of the tube P and falls onto the spatter fall surface 30. When brass is used as the material for the metal strip T there is more spatter c generated at the welded portion S than when other materials are used.

The spatter c that falls onto the spatter fall surface 30 is flushed to the front of the transportation direction of the tube P by cooling water that is injected through the open passage 27a of the ferrite core 27. When the tube P is welded at the welded portion S internal and external surface beads B are formed and the external surface bead is removed by the cutting apparatus 10.

The internal surface bead B is cut off by the cutting blade 34 of the cutting tool 22 that is supported at the distal end of the impeder 21 as the welded tube P is being transported forward.

The cutting tool 22 is able to swing around the first bolt 45a of the swing mechanism 48. In one direction, because the cutting tool 22 is urged upwards by the spring member 38 that is abutting against the internal surface P1 of the tube P, the cutting tool 2 is held in a state of being urged upwards by a balance of forces in two opposing directions such that the cutting blade 34 cuts into the internal surface bead B at the correct load and urging force.

In this state, because the tube P is being transported forwards in the longitudinal direction thereof, the cutting blade 34 of the cutting tool 22 cuts into the internal surface bead B at a predetermined cutting depth and the internal surface bead B is cut off as the chip K. At this time, because the cutting blade 34 is formed substantially in a circular arc shape along the internal surface P1 of the tube P, it can still reliably cut off the internal surface bead B even if the tube P becomes slightly twisted in the circumferential direction during the welding and the internal surface bead B is slightly shifted in position.

As is shown in Fig. 10, the chip K from the internal surface bead B that is thus generated is made to curl in a helical shape by the face 36 that forms a concave curved surface in the vertical direction. In addition, because the face 36 is inclined and curved into a convex curved surface running in the direction in which the cutting blade 34 extends from one end a to the other end b thereof, the chip K is continuously guided by this face 36 and thereby curled into a helical shape and sent towards the distal end. Therefore, the chip K is transported in the same direction as the electro-resistance-welded tube P and inside the electro-resistance-welded tube P.

After the tube P has passed through a cooling tank 12 and been forcibly cooled, it is passes through a plurality of pairs of sizing rolls 13 arranged in a row and is shaped by shaping rolls. The tube P that is then sent to the processing apparatus 150 shown in Fig. 11A is cut into predetermined lengths, for example, 4 to 6 mm by the cutting apparatus 14 together with the chip K inside the tube P and these are then stacked on the semi-lift table 151. At this time, the length of the chip pieces K is shortened because they are curled and because they are shrunk by stress.

The tubes P that have been cut into predetermined lengths are successively lifted by the lifting member 151a provided on top of the semi-lift table 151 and stacked in sequence on a stock table 15 disposed parallel to the semi-lift table 151.

As is shown in Fig. 11B, the plurality of tubes P that are stacked on the stock table 15 are placed on an incline by the cylinder arm 153 being operated so as to incline the stock table 15. By then discharging washing water from the washing device 154 into an aperture on the upper side of the tube P, during the washing out of the solidified spatter and the like inside each tube P by flushing out the inside of each tube, the chip pieces K can be flushed out at the same time from the aperture on the lower side by the washing water. The discharged chip pieces K are collected in the collecting box 155.

In this manner, the chip pieces K inside the tube P are processed and the manufacturing of the electro-resistance-welded tube P is ended.

As has been described above, according to the present invention, the chip K from the internal surface bead b cut off by the cutting blade 34 of the cutting tool 22 is curled along the face 35 and transported in a continuous state inside the tube P together with the tube P. Thereafter, it is cut together with the tube P and discharged. As a result, the structure of the cutting apparatus 20 including the cutting tool 22 is simplified and there is no need to provide a separate cutting machine to cut the chip K. It is thus possible to efficiently perform the processing to cut the chip K in accordance with the transporting and cutting processing of the tube P.

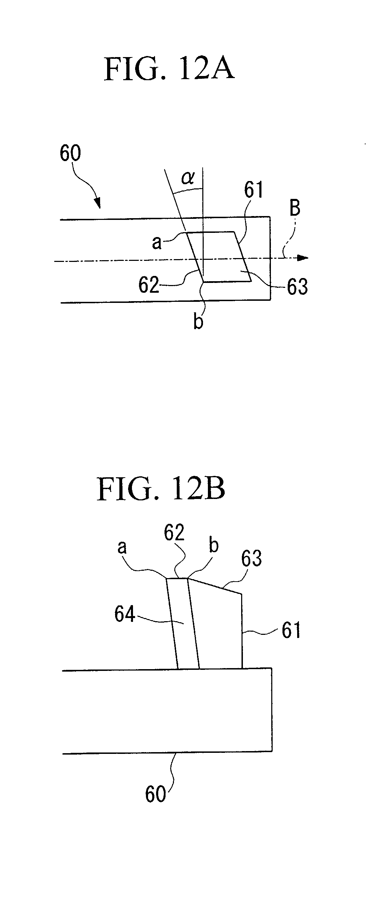

Next, a description will be given of a variant example of the cutting tool 22 according to the above described embodiment with reference to Figs. 12A and 12B. Those portions and members thereof that are the same or similar as those in the above described embodiment are given the same descriptive symbols and a description thereof is omitted.

Figs. 12A and 12B show a blade tip portion of the cutting tool according to the variant example, Fig. 12A is a plan view thereof, while Fig. 12B is a side view thereof.

A cutting blade 62 is provided on the impeder 21 side of the distal end of a blade tip portion 61 that protrudes in the diametrical direction of the tube P from the distal end portion of the cutting tool 60. A flank 63 and a face 64 are provided so as to sandwich the cutting blade 62. The cutting blade 62 has, for example, a substantially circular arc shape that conforms to the outline in the diametrical direction of the internal surface of the tube P and also has a substantially rectilinear shape as seen in the plan view shown in Fig. 12A. Moreover, if the direction of movement of the internal surface bead B is represented by the dot dash chain line, the cutting blade 62 forms an acute angle α relative to a direction that is orthogonal to the direction of transportation of the internal surface bead B. Therefore, the cutting blade 62 is made to incline moving from one end a to the other end b thereof, and when the internal surface bead B is cut off, the chip K is made to go in the direction of the other end b.

The flank 63 of the cutting blade 62 has a positive clearance angle and is also formed as a convex curved surface running along the substantially circular arc shape of the cutting blade 62. The face 64 is formed as a substantially flat plane facing the impeder 21 side and, moving from the cutting blade 62 towards the cutting tool body, has a gradual inclination towards the distal end side. At the same time, the face 64 along the direction in which the cutting blade 62 extends forms an acute angle α relative to a direction that is orthogonal to the direction of transportation of the internal surface bead B.

Therefore, in the cutting tool 60 also, a chip K of an internal surface bead B made by the cutting blade 62 is curled by the face 64 as it is moved towards the other end b side, and is sent towards the distal end side in the transportation direction of the tube P.

The cutting tools 22 and 60 of the present invention may be formed in a shape other than a substantially circular arc shape, as is shown in each of the above embodiments, and may be formed, for example, in a rectilinear shape. The shape of the faces 35 and 64 is also optional provided that they curl the chip K while moving it towards the distal end side in the transportation direction of the tube P. Even if the cutting blades 34 and 62 are arranged so as to be substantially orthogonal to the direction of movement of the internal surface bead B, it is sufficient if, moving from the one end a of the cutting blades 34 and 62 to the other end b thereof, the face 64 gradually inclines towards the distal end side in the direction of transportation of the tube P.

In the processing apparatus 150 of a tube P and chip K, when the chip pieces K are discharged together with the spatter and the like inside a tube P that has been cut on the stock table 15, as the chip discharge device, it is possible for the tube P to not be inclined, but for the spatter and chip pieces K to be discharged from inside the tube P using only the discharge pressure of the washing water from the washing device 154. Alternatively, it is possible for the spatter and chip pieces K to be discharged simply by inclining the stock table 15, or for a pushing member to be inserted inside the tube P to push the spatter and chip pieces K without the stock table 15 being inclined. It is also possible for the semi-lift table 151 to be omitted and a stock table 15 to be placed instead in the same position and for the solidified spatter and cut chip pieces K to be discharged to this position by method described above.

Cutting tools such as the cutting tools 22 and 60 do not necessarily have to be mounted on the distal end side of the impeder 21 and they may instead be mounted on a separate support member or may be inserted directly inside the tube. At this time, it is not imperative for a swing mechanism to be provided in the join portion between the cutting tool and the support member.

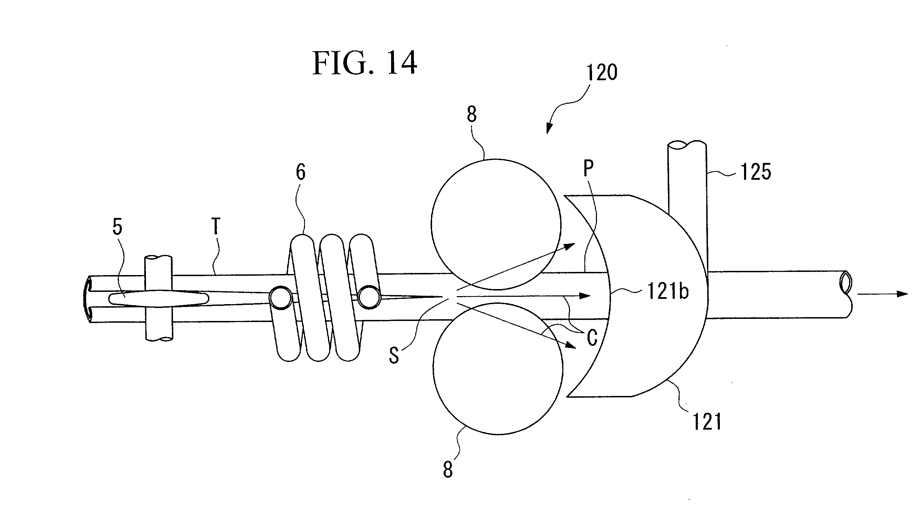

The weld spatter processing apparatus 120 according to the present invention will now be described in detail with reference made to Figs. 14 through 17.

The weld spatter processing apparatus 120 according to the present embodiment performs processing to collect spatter C generated when the two edge portions of the metal strip T that has been bent into a C shape are butted together at the top and welded by the squeeze rolls 8 and 8 of the above described apparatus. Because of inertia from the transporting of the metal strip T and the tube P, the spatter C is scattered diagonally upwards towards the front in the transportation direction of the tube P. Figs. 14 through 16 show a bell mouth tube 121 that is provided as an aperture portion on the transportation path of the welded tube P and in front of the squeeze rolls 8 and 8 and is positioned so as to open towards the squeeze rolls 8 and 8.

The bell mouth tube 121 is formed in the shape of a bell mouth that gradually widens towards the distal end aperture thereof from an inlet aperture 121d in order to capture and collect spatter C. As is shown in Fig. 14, the distal end aperture is formed in the internal diameter of an approximate circle that widens from above the tube P to approach close to the two outer peripheral ends of the pair of squeeze rolls 8 and 8. Preferably, the bell mouth tube is slightly to the front of the pair of squeeze rolls 8 and 8. Moreover, preferably, the internal surface 121a of the bell mouth tube 121 is formed such that the direction in which the spatter C rebounds after hitting the internal surface 121a is an obtuse angle relative to the direction in which the spatter C moves when scattered and points towards the inside of the bell mouth tube 121. By positioning the bell mouth tube 121 slightly apart from the squeeze rolls 8, the speed of the flying spatter C is slightly reduced by the time it hits the internal surface 121a of the bell mouth tube 121, and the spatter C can be controlled so that it does not hit the internal surface 121a at high speed and bounce back to fall outside the bell mouth tube 121.

The top portion 121b of the bell mouth tube 121 extends so as to substantially cover portions of the area above the squeeze rolls 8 and 8. The bottom portion 121c of the bell mouth tube 121 is seated on the tube P via, for example, a removing sheet portion 122 formed from a non-metallic soft material substantially in a sheet shape. Because of this, it is preferable that the removing sheet portion 122 is made from a material that is wear resistant and has a low coefficient of friction so as to allow the tube P to be transported by sliding. For example, the removing sheet portion 122 may be formed from a fabric material such as absorbent cotton or flannel, or from a rubber material such as a rubber sheet.

In the present embodiment, by using absorbent cotton as the removing sheet portion 122 and dampening the absorbent cotton with water, the sliding of the tube P past the removing sheet 122 can be performed consistently well. Moreover, because the removing sheet portion 122 is disposed in the vicinity of the heated welded portion and may be easily affected by the heat, the provision of a supply tube 123 adjacent to the removing sheet portion 122 for supplying water thereto and thereby cooling the removing sheet 123 is preferable in view of the close contact between the external surface of the tube P and the removing sheet portion 122.

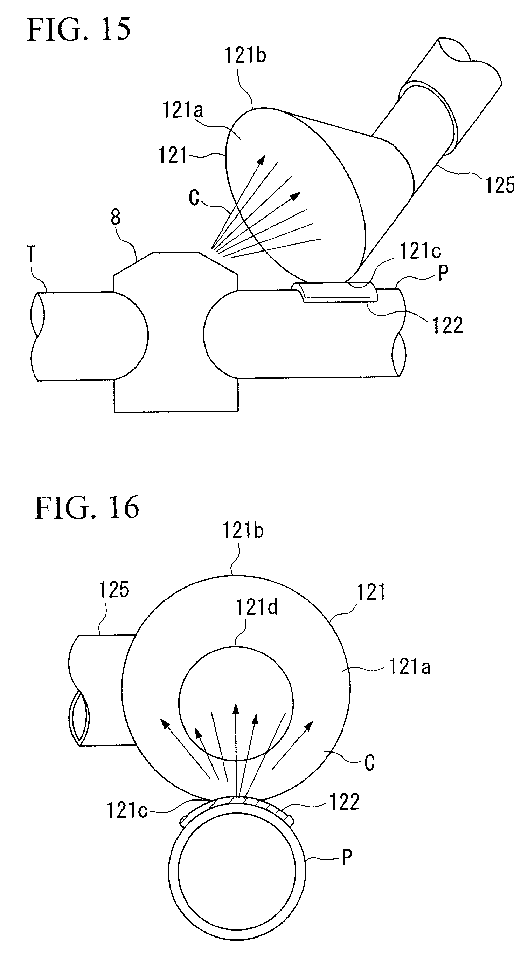

The removing sheet portion 122 may be provided so as to extend across the entire periphery of the tube P, however, it may also be provided so as to cover approximately 1/4 to 1/2 in the circumferential direction of the tube P centering on the top portion of the tube P where the likelihood of upward flying spatter C falling and adhering is the highest (in Fig. 16, the removing sheet 16 is shown as covering approximately 1/3 in the circumferential direction of the tube P).

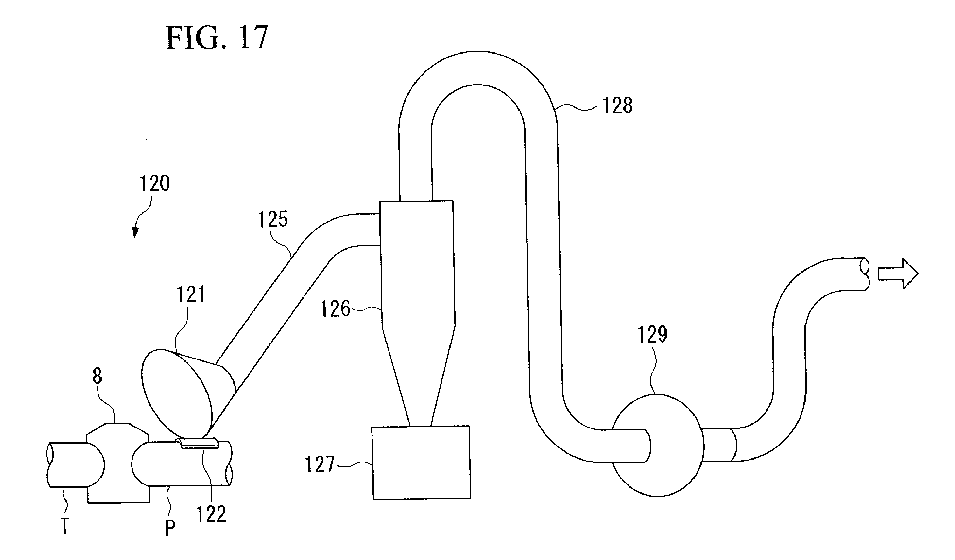

The bell mouth tube 121 is connected to a duct 125 by the inlet aperture 121d provided in the interior of the internal surface 121a. Furthermore, as is shown in Fig. 17, the bell mouth tube 121 is connected to a cyclone dust collecting apparatus 126. Here, centrifuged solidified spatter is collected in a collection box 127 provided beneath the cyclone dust collecting apparatus 126. A further separate duct 128 is connected to the cyclone dust collecting apparatus 126 and a blower 129 is provided partway along the duct 128 as a suction device.

As a result, air that has been separated from the spatter by the cyclone dust collecting apparatus 126 is discharged into the atmosphere via the blower 129 or may be reused. The suction force of the blower 129 suctions the spatter C by operating on the internal surface 121a via the inlet aperture 121d of the bell mouth tube 121.

The weld spatter removal apparatus 120 for an electro-resistance-welded tube P of the present embodiment has the above described structure. Therefore, in the electro-resistance-welded tube P manufacturing apparatus 1 shown in Fig. 1, a metal strip T that is formed from brass, for example, is continuously fed out from an uncoiler 2. It then passes through forming rolls 4 and is gradually rounded into a C shape. It is then passed through an induction heating coil 6 of an induction heating section. In the metal strip T that was heated by the induction heating coil 6, the two edges thereof that were heated as they passed between the squeeze rolls 8 and 8 are abutted and welded together.

In the weld portion S of the two edges of the metal strip T, spatter C is generated at the inside and outside of the welded tube P. The spatter C that is scattered to the external surface of the tube P flies diagonally upwards in the transportation direction of the tube P due to inertia, however, this spatter C is gathered into the bell mouth tube 121 positioned in front of the squeeze rolls 8 and 8. It then bounces off the internal surface 121a and is suctioned into the duct 125 through the inlet aperture 121d.

The spatter C that has been suctioned into the duct 125 is separated by the cyclone dust collecting apparatus 126 and is collected in the collection box 127. The air that is left is discharged to the atmosphere through the blower 129 or is reused.

The portion of the spatter C that cannot be captured by the bell mouth tube 121 flies out or collides with the internal surface 121a of the bell mouth tube 121 and falls downwards. In some cases, it also adheres to the external surface of the welded tube P. In this case, the tube P is placed in sliding contact with the removing sheet portion 122 that supports the bottom portion 121c of the bell mouth tube 121 as the tube P is being transported. Therefore, spatter C that has adhered to the external surface of the tube P is wiped off by the wet removing sheet portion 122 before it hardens. The weight of the bell mouth tube 121 is applied as pressure to the removing sheet portion 122 so that the wiping off of the spatter C from the tube can be improved.

As a result, no spatter C adheres to the tube P that has passed under the removing sheet portion 122 enabling the product quality of the external surface of the tube P to be maintained.

As described above, according to the weld spatter processing apparatus 120 of the present embodiment, spatter C that scatters at the welded portion S can be captured and taken in by the bell mouth tube 121 and then separated and collected. In addition, even if a portion of the spatter C escapes being collected by the bell mouth tube 121 and becomes adhered to the external surface of the tube P, it can be removed and collected by the removing sheet portion 122, thereby enabling contamination of the surrounding environment caused by the scattering of the spatter C and adhesion of the spatter C to the tube P to be prevented.

In the above described embodiment a structure is employed in which the bottom portion of the bell mouth tube 121 is supported by the removing sheet portion 122 used for removing spatter C adhered to the tube P, however, the present invention is not limited to this type of structure. For example, the bell mouth tube 121 may also be held in the air by a separate supporting member and not in contact with the tube P, and the spatter C adhering to the bell mouth tube 121 can be wiped off and removed by placing the removing sheet portion 122 in contact with the external surface of the tube P including the upper portion thereof separately from the bell mouth tube 121.

Instead of the suction device formed by the blower 129, or in cooperation with this suction device, it is also possible to provide an air blowing device such as an air jet that blows air into the bell mouth tube 121 from the internal surface 121 towards the inlet aperture 121d. If the blowing device is provided so as to form a spiral, for example, in the circumferential direction, the spatter C can be blown into the inlet aperture 121d.

## Claims

1. A welded tube internal surface bead cutting apparatus for cutting off an internal surface bead inside an electro-resistance-welded tube using a cutting blade of a cutting tool inserted into the electro-resistance-welded tube, wherein
the cutting tool is mounted on a distal end of an impeder such that the cutting tool is able to swing, and the cutting tool swings in a direction in which the cutting blade makes contact with the internal surface bead or moves away from the internal surface bead.

2. An internal surface bead cutting apparatus according to claim 1, wherein the cutting tool is provided with an elastic member that urges the cutting blade in a direction in which the cutting blade presses against the internal surface bead.

3. An internal surface bead cutting apparatus according to claim 1, wherein the elastic member makes contact with an internal surface of an electro-resistance-welded tube via a protective member that is formed from a non-metallic material and has a low coefficient of friction.

4. A welded tube internal surface bead cutting apparatus for cutting off an internal surface bead inside an electro-resistance-welded tube using a cutting blade of a cutting tool inserted into the electro-resistance-welded tube, wherein
the cutting tool is provided with a cutting blade that faces rearward in the transportation direction of the electro-resistance-welded tube, and a rake face of this cutting blade is formed so as to be slanted relative to the transportation direction of the electro-resistance-welded tube from one end to another end in a direction in which the cutting blade extends, and wherein
an internal surface bead chip that has been cut off by the cutting blade is guided by the face and is sent in the transportation direction of the electro-resistance-welded tube.

5. An internal surface bead cutting apparatus according to claim 1, wherein the cutting blade is formed substantially in a circular arc shape running in an internal surface circumferential direction of the electro-resistance-welded tube.

6. A welded tube chip processing method, in which an internal surface bead of a moving electro-resistance-welded tube is cut off by a cutting tool and a resulting chip is sent in the transportation direction of the electro-resistance-welded tube, and thereafter the chip inside the electro-resistance-welded tube is cut and discharged together with the electro-resistance-welded tube.

7. A welded tube chip processing method according to claim 6, wherein the chip piece is discharged by supplying washing water to the inside of the cut electro-resistance-welded tube.

8. A welded tube chip processing apparatus, comprising:
a cutting tool which cuts off an internal surface bead of a moving electro-resistance-welded tube and sending the chip in the transportation direction of the electro-resistance-welded tube;
a cutting machine which cuts the electro-resistance-welded tube from which the internal surface bead has been removed together with the chip inside the electro-resistance-welded tube; and
chip piece discharge device which removes the cut chip piece from inside the cut electro-resistance-welded tube.

9. A welded tube chip processing apparatus according to claim 6, wherein the chip discharge device has washing device that discharges the chip pieces by supplying washing water to the inside of the electro-resistance-welded tube.

10. A welded tube internal surface bead cutting apparatus for cutting off an internal surface bead inside an electro-resistance-welded tube using a cutting blade of a cutting tool inserted into the electro-resistance-welded tube, wherein
the cutting tool is provided with an elastic member that imparts elasticity in a direction in which the cutting blade presses against the internal surface bead.

11. An internal surface bead cutting apparatus according to claim 10, wherein the elastic member is provided in an area opposite the cutting blade.

12. An internal surface bead cutting apparatus according to claim 10, wherein a plurality of elastic members are provided separated from each other in an internal surface circumferential direction of the electro-resistance-welded tube.

13. A welded tube internal surface bead cutting apparatus according to claim 10, wherein the cutting tool is provided with an adjusting member for adjusting an elastic force of the elastic member.

14. A welded tube internal surface bead cutting apparatus according to claim 10, wherein the elastic member makes contact with an internal surface of an electro-resistance-welded tube via a protective member that is formed from a non-metallic material and has a low coefficient of friction.

15. A welded tube internal surface bead cutting apparatus according to claim 14, wherein the protective member is formed from fluororesin.

16. A weld spatter processing apparatus for an electro-resistance-welded tube formed by bending a moving plate shaped material into a tube shape and then heat welding both edges, wherein
an aperture portion is provided in the vicinity of a welded portion of the electro-resistance-welded tube for guiding spatter that is generated by the welded portion, and spatter is collected through this aperture portion.

17. A weld spatter processing apparatus according to claim 16, wherein the aperture portion is in contact with a top of the electro-resistance-welded tube via a removing member that collects spatter adhering to the electro-resistance-welded tube.

18. A weld spatter processing apparatus according to claim 17, wherein water is supplied to the removing member.

19. A weld spatter processing apparatus according to claim 16, wherein the processing device is provided with suction device or blowing device, and spatter that is scattered inside the aperture portion is collected using the suction device or blowing device.

20. A weld spatter processing apparatus for an electro-resistance-welded tube formed by bending a moving plate shaped material into a tube shape and then heat welding both edges, wherein a removing member that collects spatter adhering to the electro-resistance-welded tube is in contact with a top of the electro-resistance-welded tube.

21. A weld spatter processing apparatus according to claim 17, wherein the removing member is a non-metallic soft member.
